# EUROPEAN PATENT APPLICATION

(11) **EP 4 762 925 A1**
(43) Date of publication of application: **24.06.2026**
(21) Application number: 24222216.4
(22) Date of filing: 20.12.2024
(51) Int. Cl.: A01N 27/00, A01N 31/06, A01N 37/36, A01P 3/00

(54) **BIODEGRADABLE FUNGICIDAL PHYTOALLIANCE BASED ON SHIKIMIC ACID AND TERPENES FOR INHIBITION OF SPORE FORMATION AND GROWTH OF MOLD MYCELIUM ON DENSE OR HARD SURFACES**

(71) Applicant: SkyLab AG, 1066 Epalinges (CH)
(72) Inventor: Belous, Elena, 121309 MOSCOW (RU); Filatov, Viktor Andreevich, 119415 MOSCOW (RU)
(74) Representative: Glawe, Delfs, Moll

(57) **Abstract**

The invention relates to a fungicidal surface cleaning composition comprising shikimic acid or salts thereof and terpenes. Said composition is useful for protecting outer dense or hard surfaces of a non-living object from fungal contamination or for fungal suppression of fungi that have been colonized on said surfaces.

## Description

### FIELD OF INVENTION

The invention is related to a biodegradable fungicidal phytoalliance based on shikimic acid and terpenes and the use thereof for effective inhibition of yeast-like fungi, fungi and mold strains affecting house and food, such as *Aspergillus niger, Penicillium funiculosum, Fusarium solani.* A phytoalliance of plant origin for the use in multipurpose household chemicals comprises the components A and B, wherein:
(A) Shikimic acid or the salts thereof, shikimates, of plant origin
(B) Terpenes of plant origin isolated from essential oils and/or plant extracts or entering the composition of essential oils, such as β-caryophyllene, 3-carene, eugenol or terpinen-4-ol individually or as combination thereof,
wherein the weight ratio of the components in terms of active substances is (0.06-0.5):(0.03-0.5) wt%, respectively.

Effect of the composition is achieved due to targeted action and high capacity for inhibition of mycelium growth and sporulation of molds of genera *Aspergillus, Penicillium* and *Fusarium.* The composition is intended for addition into the household chemicals including the floor detergents, dishwashing detergents, furniture detergents, and the products for other indoor surfaces formulated as a spray, a gel or a powder. The composition is biodegradable, skin friendly, and can be used in manufacture of the household chemicals that can be used by people with sensitive skin, such as dry, liquid, and concentrated floor detergents, damp sweeping detergents, and laundry detergents.

### BACKGROUND OF THE INVENTION

At present improvement of properties of the household chemicals is one of the promising directions of development. Statistics of the recent years indicate that consumers globally became more careful about the composition of the products, which they are going to buy, and check them for the presence of substances safe for environment, pets and humans. For instance, in France, Germany, Great Britain, and Italy the attention to ingredients of the used products increased by 39% [interview of 1933 persons by Kantar Profiles/Mintel; A year of innovation in fabric and dish care, 2021, Mintel]. The tendency to purchasing environmentally friendly, safe and natural household chemicals is observed globally. Canadian consumers try to use only products free from harmful chemical additives [31% of consumers based on the interview of 1429 persons by Kantar Profiles/Mintel; A year of innovation in fabric and dish care, 2021, Mintel]. By 2025 the growth in demand is expected for sustainable products with high level of natural components, free from list and based on innovative solutions for higher efficacy and multifunctionality. Due to wide choice of products on the market the consumer more often focuses on characteristics of the purchased detergent: efficacy of removing the stubborn and especially specific stains, speed and delicacy of cleansing, hypoallergenicity.

Antibiotic resistance and superbugs problem pose a great threat to the public health and were comprehensively investigated by World Health Organization (WHO) and other health organizations. As reported by WHO, by 2050 the superbugs may be responsible for 10 million deaths unless the urgent steps are taken to develop the highly efficient products [https://www.who.int/news-room/fact-sheets/detail/antibiotic-resistance].

The studies show that in a home environment the microbes may be resistant to antimicrobials and other antiseptic agents, and thus hardly treated. Some of the hazardous microorganisms, which may inhabit the home environment, include *Escherichia coli, Staphylococcus, Klebsiella pneumoniae, Pseudomonas aeruginosa,* and *Enterococcus faecium.* Dirty vegetables, fruit, sponges, napkins, rags, pet bowls, remote control units, dirty dishes, dirty floor, windows, air conditioners, and refrigerators are the main reservoirs of these microorganisms. The challenge of microbial drug resistance in home environment can lead to difficulties in infection treating and greater risk of infection spreading in the household and in society [Sharma S, Chauhan A, Ranjan A, MathkorDM, Haque S, Ramniwas S, Tuli HS, Jindal T, Yadav V. Emerging challenges in antimicrobial resistance: implications for pathogenic microorganisms, novel antibiotics, and their impact on sustainability. Front Microbiol. 2024 Apr 29;15: 1403168.].

The superbug development may result from improper use of antiseptics both in humans and in agricultural animals. UN Food and Agricultural Organization and WHO reported the relationship between the antibiotic use in animal husbandry and the growth of antibiotic resistance [http://www.fao.org/home/en]. The publications in The Lancet indicate that antibiotic-resistant infections have already killed may people globally. Fatal cases due to antibiotic-resistant bacteria has become increasingly prevalent [Keogh-Brown, M. R., Smith, R. D., & Edwards, O. (2018). The global challenge of antimicrobial resistance and the importance of surveillance: A systematic review and implications for the landscape analysis. The Lancet Infectious Diseases, 18(10), 355-369].

Home microbiome is a total of genetic material of home-inhabiting microorganisms. Home microbiome includes various microorganisms, in particular, the pathogenic bacteria, molds and fungi. On the most frequently contacted surfaces such as doors and switches *Actinomycetales* spp. in the range of 12-25%, *Streptococcaceae* spp. in the range of 8-9%, and *Corynebacteriaceae* spp. in the range of 5-6% may be found. *Actinomycetales* spp. in the range of 12-25%, *Pseudomonadales* spp. in the range of 5-10%, and *Lactobacilliales* spp. in the range of 12-40% may inhabit he kitchen surfaces and the fridge. *Clostridiales* spp. in the range of 30-32%, *Bacteroidales* spp. in the range of 7-8% and *Neisseriales* spp. in the range of 0.5-1% may be found on the toilet seat. In the bathroom *Staphylococcus*/*Streptococcus* spp., *Corynebacterium*/*Propinobacterium spp.* may be present. *Actinomycetales* spp. in the range of 12-25%, *Clostridiales* spp. in the range of 10-12%, *Bactroidales* spp. in the range of 9-10% and *Neisseriales* spp. in the range of 5-6% may be found in the bed, on pillows, and blankets. On remote control units, keyboards, and mice yeast and mold in the range of 32-68% and coliform bacteria in amount of 5% may be present. Kitchen utensils, such as sponges and rags may bear yeast and mold in 86% of households, E. coli (coliform bacteria) in 75% of households, and staphylococci in 18% of households. On pet bowls yeast ad mold may be present in 45% of households, E. coli (coliform bacteria) in 18% of households, and staphylococci in 14% of households. Dust may comprise yeast, mold, and spores (*Penicillium, Aspergillus*), mites and spore-forming bacteria. Therefore, even under conditions of regular cleaning all household items may bear pathogenic bacteria including *Escherichia coli, Staphylococcus aureus, Staphylococcus epidermidis, Micrococcus luteus, Klebsiella pneumoniae, Pseudomonas aeruginosa,* and also molds *Aspergillus niger* and *Penicillium funiculosum,* which may have negative impact of the health of dwellers.

Home microbiome including the flora on various surfaces bears the drug resistance genes emphasizing the importance of monitoring of spread of the infections [Ben Maamar S, Hu J, Hartmann EM. Implications of indoor microbial ecology and evolution on antibiotic resistance. J Expo Sci Environ Epidemiol. 2020 Jan;30(1):1-15; Inda-Díaz, J.S., Lund, D., Parras-Moltó, M. et al. Latent antibiotic resistance genes are abundant, diverse, and mobile in human, animal, and environmental microbiomes. Microbiome 11, 44 (2023).

Modern humans spend indoors (home, office, school, institutions) most of the time, exposed to microbial communities inhabiting the indoor environments [Shan, J., Patel, K., & Hicken, A. (2019). Microbial communities in indoor environments and their implications for human health. International Journal of Environmental Research and Public Health, 16(10), 1874. doi: 10.3390/ijerph161018]. Home microbes can significantly affect the human health. For example, it was established that indoor flora can contribute to the risk of development of various diseases, such as asthma, allergic rhinitis, and pneumonia. The authors of the article [Hilty, M., et al. (2010). The nasal microbiota of healthy adults: a community structure analysis using 16S rRNA and DGGE fingerprints. Environmental Microbiology, 12(3), 733-742.] showed in the study that the flora diversity in the home environment can contribute to development of asthma in children. The investigators [Gehring, U., et al. (2011). Exposure to house dust mite and cat allergen accelerates the development of asthma in childhood. Journal of Allergy and Clinical Immunology, 128(3), 588-595.] found that the presence of certain microbe species indoors is associated with increased risk of allergic rhinitis. The authors of the article [Fernández-Barrial, M.A., et al. (2017). Microbial communities and their association with host inflammatory markers in pediatric community-acquired pneumonia. Pediatric Pulmonology, 52(5), 674-681.] found the association between the presence of certain microbe species indoors and increased risk of pneumonia in children. Some modern studies indicate that the home microbiome has impact on various aspects of the children's health such as attention deficit/hyperactivity disorder (ADHD), asthma and allergic rhinitis [Dunn et al. (2017). "The Household Indoor Microbiome in 2 US Agricultural Counties: Child's Presence, Home Features, and Agricultural Exposures." Current Developments in Nutrition, 1(suppl_1), 1224].

According to a number of studies, the house dust is one of the key sources forming the home microbiome [Macher JM. (2001). Indoor Dust: A Valuable Source of Information on Microbial Exposure. Journal of Allergy and Clinical Immunology, Volume 107, Issue 3, Supplement, Pages S505-S514. doi: 10.1067/mai.2001.115569; Shan J, et al. (2019). Indoor microbiota in severely moisture damaged homes and the impact of interventions. Microbiome, 7, Article number: 126. doi: 10.1186/s40168-019-0748-7]. The study by J. Shan, M.Z. Nikolic and W. Duan showed that home microbiome considerably depends on the indoor air quality. Analysis of the floor dust showed the presence of yeasts and molds. In the dust spore-forming bacteria, filamentous fungi, and molds: *Aspergillus, Penicillium, Cladosporium, Alternaria,* and *Stachybotrys* were found. Numerous factors influence propagation and growth of the microorganisms. It was shown that formation of home microbiota is determined by inhabiting humans and animals, geographical location, season, and also frequency and character of cleaning [Shan, J., Nikolic, M. Z., & Duan, W. (2019). House Dust Microbiome assemblage is significantly influenced by indoor air quality. Building and Environment, 156, 135-144].

Mold is micromyces, which can grow in a house creating problems to health and the house structure. The life cycle of mold starts from emergence of spores, which can enter the house from ventilation system, windows or even wih clothes. When conditions become suitable, spores germinate and form thick mycelium - a network of thin fibrils. Spores can flow in the air and settle of the surfaces including walls, ceilings, and floors, and penetrate cracks and pores of the materials. Molds feed on organic matter such as such as wood, wallpaper, or dust, and can cause material degradation as it grows. Managing mold often requires a fundamental approach, including eliminating the source of moisture, improving ventilation, and using special products to kill fungi and remove mold.

The studies show that some strains of fungi and mold, for example, such as *Aspergillus, Penicillium, Alternaria* and *Cladosporium,* can release the allergens contributing to the development of allergic reactions in humans. This is especially true for the people with hypersensitivity to potentially allergic substances. Molds can release spores that, when inhaled, can cause respiratory diseases, allergic reactions, asthma, rhinitis, conjunctivitis, and other respiratory problems [J.D. Cooley, W.C.Wong, C.A.Jumper, D.C. Straus. Fungi and the Indoor Environment: Their Impact on Human Health //Advances in Applied Microbiology. -2004.-Vol. 55.- P.1-30]. Some mold strains, such as *Stachybotrys chartarum,* can produce toxins known as mycotoxins, which are hazardous when inhaled or on contact with skin [Nielsen, K.F., Gravesen, S., Nielsen, P.A., Andersen, B. Mold growth on building materials under low water activities. International Journal of Food Microbiology, vol. 66, no. 2, pp. 225-233, 2001.; Flannigan, B., Samson, R.A., Miller, J.D. Microorganisms in Home and Indoor Work Environments: Diversity, Health Impacts, Investigation and Control. CRC Press, 2001.].

The studies show that various strains of fungi and molds such as *Aspergillus, Penicillium, Cladosporium, Alternaria, Stachybotrys,* etc. can grow under home conditions. These microorganisms can be found on various surfaces including walls, ceilings, floors, furniture, and other home items. They can propagate if sufficient levels of moisture and nutrients are available. It was noticed in international study that some mold strains, specifically, *Aspergillus flavus, Aspergillus fumigatus, Penicillium chrysogenum, Stachybotrys chartarum* can release toxins, which may destroy the human respiratory tract and cause chronic respiratory diseases subject to prolonged exposure [Samson RA, Visagie CM, Houbraken J, et al. Phylogeny, identification and nomenclature of the genus Aspergillus. Stud Mycol. 2014;78:141-173; Denning DW, Pashley C, Hartl D, et al. Fungal allergy in asthma-state of the art and research needs. Clin Transl Allergy. 2014;4:14; Green BJ, Tovey ER, Sercombe JK, et al. Fungal fragments and undocumented conidia function as new aeroallergen sources. J Allergy Clin Immunol. 2005;115(5):1043-1048; Institute of Medicine (US) Committee on Damp Indoor Spaces and Health. Damp Indoor Spaces and Health. The National Academies Press; 2004].

The molds *Alternaria alternata, Aspergillus niger, Cladosporium langeronii, Penicillium funiculosum and Stachybotrys chartarum* are different species, which can be found at home. Each species is characterized by special features and potential consequences for the human health. Main mold strains and their impact on the human health are discussed below.

*Aspergillus niger* is a commonly occurring mold in soil, on food, and moist surfaces at home. This fungus can cause allergy, asthma, and can be occasionally toxic due to mycotoxin production and release of black spores [Kaushik, S. V. et al. (2016). Antifungal susceptibility testing of clinical isolates of Aspergillus niger against amphotericin B, itraconazole, and other antifungal agents. Journal of Dental Research and Review. Shukla, S. K. et al. (2017). Antifungal susceptibility profile of clinical and environmental isolates of Aspergillus niger. Journal of Clinical and Diagnostic Research].

*Alternaria alternata* is found on various home surfaces including walls, wallpaper, carpets, and also on food. This fungus can cause allergic reactions and respiratory problems in humans. [Handa, M., et al. (2001). In vitro sensitivity of Alternaria species to conventional and newer antifungals. Journal of Clinical Microbiology, 39(12), 4465-4468; Kanjanaumpornchai, T., et al. (2015). In vitro antifungal susceptibility of Alternaria isolates associated with fungal rhinosinusitis. Journal of Medical Microbiology, 64(4), 343-348].

*Cladosporium langeronii* occupies windows, wallpaper, wooden surfaces, and other materials at home. Though this mold species usually does not pose a serious threat to human health, it can cause serious allergic reactions [Shukla, S. K. et al. (2017). In vitro antifungal susceptibility of clinical and environmental isolates of Cladosporium species. Indian Journal of Medical Microbiology. Shukla, S. K. et al. (2020). In vitro antifungal susceptibility of Cladosporium cladosporioides complex isolates from clinical and environmental sources. Journal of Fungi].

*Penicillium funiculosum* may be found on food products, and also on wallpaper and moist places indoors. Generally, this fungus is not considered hazardous fot health, however, some *Penicillium* species can be toxic [Jain, M. et al. (2018). In vitro susceptibility of clinical and environmental isolates of Penicillium species. Indian Journal of Medical Microbiology. Jain, M. et al. (2019). In vitro antifungal susceptibility of clinical and environmental isolates of Penicillium species against six antifungal agents. Journal of Fungi].

*Stachybotrys chartarum* can be found indoors on moist materials, such as gypsum plasterboard and wood. This mold species can be toxic and is associated with the health problems including allergies and respiratory diseases [Rahman, I. et al. (2019). Improvement in Isolation and Identification of Stachybotrys spp. and Mycotoxin Analysis: Evidence Challenges. Toxins (Basel). Streifel, D. E. et al. (2009). Antifungal susceptibility of Stachybotrys chartarum isolates from indoor environments. Journal of Occupational and Environmental Hygiene].

*Fusarium solani* is an important phytopathogen and soil saprophyte. Inhalation or inoculation due to mild trauma can lead to the wide-spread Fusarium infection in the patients with compromised immunity. Fusarium spp., in particular, *Fusarium solani,* are a common cause of keratitis. These species are also common causative agents of onychomycosis, endophthalmitis, and skin and musculoskeletal infections [Pai R, Boloor R, Shreevidya K, Shenoy D. Fusarium solani: An Emerging Fungus in Chronic Diabetic Ulcer. J Lab Physicians. 2010 Jan;2(1):37-39].

In view of the above problems the management of home microbiome is one of priority areas in development of household chemicals and personal hygiene products aimed at the long-term health. In recent decades, it has become evident that the quality of cleaning in living premises has a significant impact on human health. Fungi and various types of mold, which are prevalent at home, can have a pronounced negative impact on our health, in particular, on the incidence of allergy manifestations, the state of the respiratory tract, and the psychological and emotional state. Many bacteria and molds are capable of colonizing and inhabiting the depth of the surfaces making the superficial cleansing inadequate for provision of perfect cleanliness. The fungi are known to penetrate the inner layers of various materials including concrete and wood and to form hyphae, which can hardly be eradicated [Hardy MC, Daly NL, Mobli M, Morales RAV, King GF (2013) Isolation of an Orally Active Insecticidal Toxin from the Venom of an Australian Tarantula. PLoS ONE 8(9): e73136]. Thus, a modern consumer needs deep and qualitative cleansing of all surfaces, and also the products, which will allow to control mold and fungi occurring in home flora.

The search and incorporation of components of plant origin, such as the components of essential oils and individual components thereof, terpenes isolated from plant sources into the modern products for management the home flora is considered to be the most promising trend. The studies confirm that the plant components due to relatively safe nature and less probable development of resistance are potentially advantageous as the alternative agents intended to control the microorganisms, such as mold. For instance, the researchers study the use of the essential oils from plants for eradication of the yeast-like fungi of *Candida* genus. They suggest the interaction mechanisms and the prospects for the use of plant components in food industry in order to maintain the safety of the food products [Kim, W., & Kim, J. (2017). Plant essential oils for controlling Candida species: mechanisms of action and prospects for use in food preservation. Journal of Food Science, 82(11), 2567-2578]. In another review various plant products as antimicrobial sources are discussed. The author discusses the mechanisms of the plant components, the prospects and potential use thereof for the sake of control of various microorganisms [Cowan, M. M. (1999). Plant products as antimicrobial agents. Clinical Microbiology Reviews, 12(4), 564-582]. One article presents the results of a study of environmentally friendly components of the plant essential oils that exhibit fungicidal activities against pathogenic fungi. The authors note that these plant components are highly effective against various types of molds and affect the spore formation in these fungi [Park, I. K., & Choi, K. S. (2015). Eco-friendly and fumigant antifungal activities of essential oil components against pathogenic fungi. Mycobiology, 43(3), 290-297]. To achieve a comprehensive effect, a combination of synergetic components working is required, since at present the cell wall of fungi and molds is resistant to the penetration of antiseptics and fungicides [Lima SL, Colombo AL, de Almeida Junior JN. Fungal Cell Wall: Emerging Antifungals and Drug Resistance. Front Microbiol. 2019 Nov 21;10:2573.]. The researches note that the use of multi-component mixtures of essential oils and the other plant components can result in enhanced total effect, overcoming the resistance of the cell wall and achievement of the broader spectrum of activity. Novel approaches to development of antimicrobial substances and creation of synergetic combinations of components will allow to maximize the effect on fungi and molds. These approaches can include the fungicides and potentiators, which react with the cell wall components to provide the comprehensive effect, to overcome the microbial resistance, and to inhibit the growth of almost inaccessible mold strains.

The authors for the first time propose the approach of combination effect based on the use of fungicide affecting the intracellular processes in mold mycelium, and potentiator affecting the microstructure of the fungal cell wall and improving the fungicide penetration inside. The use of only fungicide does not provide the necessary effect because of resistance of fungal and mod strains [Lima SL, Colombo AL, de Almeida Junior JN. Fungal Cell Wall: Emerging Antifungals and Drug Resistance. Front Microbiol. 2019 Nov 21;10:2573].

Fungicides are a class of antimicrobials developed specifically to combat fungi and mold. They are able to destroy or inhibit the growth and development of fungi, including killing the cells and inhibiting the vital processes in cell. The fungicides can be used for control and prevention of fungal infections and also for protection from fungal diseases. Potentiators are the substances that facilitate the penetration and action of antimicrobial and fungicidal components. In the context of antimicrobial substances, potentiators can aid to increase the penetration of components into fungal and mold cells, thus improving the efficacy of antimicrobial action. They facilitate the penetration of substances through cellular structures making them more accessible for the effect on microorganisms.

This approach of fungicide and potentiator combination is a novel area of development of the antimicrobial substances, which allows to achieve more effective and comprehensive control of fungi and molds and to overcome possible barriers associated with resistance of the cell wall.

Essential oils from herbs and conifers exhibit antibacterial properties, beneficial effects on the skin and an aromatherapeutic effect. These oils contain various components including terpenes which contribute significantly to chemical composition and properties of oils. Terpenes form a broad group of organic compounds that are main components of all essential oils. Terpenes and the compounds thereof exhibit a variety of physical and biological properties, making them attractive for research and use in various fields including aromatherapy, beauty industry, and pharmaceutical industry. Potential antibacterial and antifungal properties of terpenes make them important in the context of controlling the resistant molds and microorganisms at home.

Terpinen-4-ol (*Terpinen-4-ol,* CAS 562-74-3) is an organic compound belonging to the group of terpene alcohols. This naturally occurring compound can be found in many essential oils, including lavender oil, juniper oil, tea tree oil, and turpentine oil. Terpinene-4-ol is known for its antiseptic and anti-inflammatory properties and may be beneficial for skin and for the organism as a whole [Karabay YavasĝluN.U., Özdemir H., Coskun D. (2018). Antioxidant and antimicrobial activities of monoterpene hydrocarbons against some foodborne bacteria. Journal of Food Safety and Food Quality, 69(4), 176-183]. Antibacterial effects against *Staphylococcus aureus* and *Escherichia coli* and anti-inflammatory effect of terpinene-4-ol were studied [Agoro UY, Martin-Garcia M, Lapresa-Alcalde L, Zapata-Pérez S, Iglesias-Peinado V, Ríos-Sánchez EH, et al. Anti-inflammatory effects of α-terpineol on helper T cell-mediated immune responses. International Immunopharmacology. 2016;36:56-72.; de Morais PDG, Cardoso RS, Magalhães BAM, Boleti JA, Rosa LS, Santana Filho MA, et al. Bioactivities of essential oil from Eucalyptus globulus. Evidence-Based Complementary and Alternative Medicine. 2018;2018:7360534.; Savioli MSB, Martins R, Canesso M, da Silva N, Ariza C, Ramos H, et al. Antibacterial activity and mode of action of α-terpineol against Staphylococcus aureus and Escherichia coli. Natural Product Research. 2015;29(24):2357-2362.; Sienkiewicz M, Glowacka A, Poznański P, Kaszuba A, Urbaniak A, Kowalczyk E. Antibacterial activity of terpenes and terpenoids present in essential oils. ResearchGate. 2011].

Eugenol (*Eugenol,* CAS 97-53-0) is a phenolic compound, which is a component of the essential oils from *Syzygium aromaticum, Cinnamomum verum or Cinnamomum zeylanicum, Myristica fragrans, Vetiveria zizanioides, Rosmarinus officinalis,* and also exhibits various properties. Eugenol has anti-inflammatory properties [Prasad S, Tyagi AK, Aggarwal BB. "Recent Developments in Delivery, Bioavailability, Absorption and Metabolism of Curcumin: The Golden Pigment from Golden Spice." Cancer Res Treat. 2014;46(1):2-18. doi:10.4143/crt.2014.46.1.2.; Ramalingam S, Yachandra VK, Siva AB, Nirmal RM, Karthick R, Ahamed CP, et al. Eugenol exhibits anti-inflammatory potential in human gingival fibroblasts and periodontal ligament cells. The European Journal of Oral Sciences. 2019;127(4):315-24.; Dongre S, Langade DG, Bhattacharyya DK, Naik SR. Evaluation of the anti-inflammatory, antioxidant and analgesic activities of the essential oil from Syzygium aromaticum. Inflammopharmacology. 2015;23(6):337-43]. The studies confirm the antibacterial activity of eugenol against wide spectrum of bacteria and only yeast-like fungi of *Candida* genera [Raut JS, Karuppayil SM. Antimicrobial activity of essential oils and other plant extracts. Journal of Applied Microbiology. 2014;117(5):1219-27.; Kalemba D, Kunicka A. Antimicrobial activity of clove oil and its potential in the treatment of vaginal candidiasis. Phytotherapy Research. 2003;17(8):934-8.; Prabuseenivasan S, Jayakumar M, Ignacimuthu S. Antibacterial activity of eugenol and essential oils containing eugenol: A mechanistic viewpoint. Food and Chemical Toxicology. 2006;44(9):1139-47].

3-carene (*3-carene,* CAS 13466-78-9) is a cyclic monoterpene found in many plants including conifers, such as a pine, a spruce and a juniper. This component comprises sharp pine and citrus aromatic note. The study published in "Journal of Natural Products" in 2008 showed that 3-carene exhibits anti-inflammatory effect through inhibition of enzyme cyclooxygenase-2 (COX-2). The researchers found that 3-carene down-regulates the synthesis of inflammatory mediators, such as prostaglandins, and this results in alleviation of skin inflammation [YeonJi Kim et al. Isolation of Anti-Inflammatory Terpenoids from Korean Juniperus chinensis L. var. sargentii. Journal of Natural Products 2008, 71 (4), 854-856. DOI: 10.1021/np0705977]. Another study published in "Pharmaceutics" in 2020 showed the antibacterial effect of 3-carene. In this study 3-carene efficacy against various bacterial species was demonstrated, including *Staphylococcus aureus* and *Escherichia coli.* Furthermore, 3-carene also showed synergistic effect when used in combination with antibiotics meaning that 3-carene can enhance the antibacterial activity thereof [Agnieszka Szopa et al. Efficacy of 3-Carene on Reduction of the Inflammatory Response in an In Vitro Model of J774A.1 Cells Activated by LPSs from Escherichia coli. Pharmaceutics 2020, 12 (1), 90. DOI: 10.3390/pharmaceutics12010090].

β-caryophyllene (*β-caryophyllene,* CAS 87-44-5) is a cyclic sesquiterpene, a key component of some essential oils, and has a spicy odor, this compound is found in the plants including clove tree, black pepper, and rosemary. It exhibits anti-inflammatory properties [Gertsch, Jürg, et al. "Beta-caryophyllene is a dietary cannabinoid." Proceedings of the National Academy of Sciences 105.26 (2008): 9099-9104]. β-caryophyllene is known for its capacity to interact with endocannabinoid receptors and thus to improve the mood and general well-being in humans [Fidyt, Klaudyna, et al. "β-Caryophyllene and β-caryophyllene oxide-natural compounds of anticancer and analgesic properties." Cancer medicine 5.10 (2016): 3007-3017].

Alpha-pinene (*alpha-pinene,* CAS 7785-70-8) is one of bicyclic monoterpenes and is found in various plants including conifers, various mints and rosemary varieties. Alpha-pinene exhibits anti-inflammatory properties [Santos, F. A., Rao, V. S., & Silveira, E. R. (1998). Evaluation of antinociceptive effect of α-pinene in mice. Journal of Pharmacy and Pharmacology, 50(7), 809-812.; Kim, D. S., Lee, H. J., & Jeon, Y. D. (2012). Anti-inflammatory effects of α-pinene in lipopolysaccharide-stimulated RAW 264.7 macrophages. Food and Chemical Toxicology, 50(12), 4019-4027.; Bakkali, F., Averbeck, S., Averbeck, D., & Idaomar, M. (2008). Biological effects of essential oils-A review. Food and Chemical Toxicology, 46(2), 446-475]. In addition, some studies showed that alpha-pinene can exhibit calming properties and helps to remove stress and anxiety [Russo, E. B. (2011). Taming THC: potential cannabis synergy and phytocannabinoid-terpenoid entourage effects. British Journal of Pharmacology, 163(7), 1344-1364.; Kim, S. H., Yang, E. J., Lee, S. M., Kim, Y. S., & Song, K. S. (2013). Anxiolytic-like effects of alpha-pinene in mice. Life sciences, 92(14-16), 935-942.].

Precursors of biologically active compounds, such as shikimates and the modifications thereof, may act as another useful component for inhibition of spore formation. Shikimic acid (*shikimic acid,* CAS 138-59-0) is produced by the plants of *Orchidaceae* genera, such as *Staricellia bripara* and *Staricellia armata,* and also from anise apples (P*impinella anisum*), which grow in various regions of the world. Shikimic acid is a potential antimicrobial agent because of the capacity for interaction with certain microbial enzymes resulting in arresting the growth of microbes [Nandini, K., Mishra, B.B. Shikimic Acid: A Multifunctional Molecule for the Nascent Era. Molecules. 2017. V.22. P. 2100-2116]. However, there are factors limiting the use of this compound, in particular, low capacity of shikimic acid for penetration through the fungal cell wall and hydrophilic properties [S. Zhu, Y. Wang, X. Liu, et al. "Metabolomics study on the inhibitory effect of shikimic acid against Candida albicans." Journal of Pharmaceutical and Biomedical Analysis, 2020. DOI: 10.1016/j.jpba.2019.112990; M.S. Islam, S. Shawan, P. Al-Amin, et al. "Shikimic acid: comprehensive review on occurrence, biosynthesis, pharmacological activities and future prospects." Arabian Journal of Chemistry, 2021. DOI: 10.1016/j.arabjc.2020.11.011]. Shikimic acid can affect the microbial metabolic pathways and enzymatic activity. It was sown in the scientific publication "Inhibition of fungal cell wall synthesizing enzymes by trans-cinnamic, vanillic and syringic acids" that shikimic acid can affect the enzymes responsible for the synthesis of cell wall in fungi [Mishra, B. B., Singh, R. K., Upadhyay, G., Maurya, S., & Singh, A. K. (2012). Inhibition of fungal cell wall synthesizing enzymes by trans-cinnamic, vanillic and syringic acids. Indian Journal of Experimental Biology, 50(12), 850-855)]. However, high levels of shikimic acid are needed for persistent antibacterial effect. The article "Antibacterial activity of shikimic acid from Ventilago madraspatana Gaertn. fruits against multiple drug resistant uropathogens" shows the results of antibacterial activity of shikimic acid obtained from fruit of *Ventilago madraspatana Gaertn.* against multiresistant urinary pathogens [Velu, R.K., Sundararaj, D.R., & Sahoo, A.K. (2020). Antibacterial activity of shikimic acid from Ventilago madraspatana Gaertn. fruits against multiple drug resistant uropathogens. Research in Social and Administrative Pharmacy, 16(5), 691-695. DOI: 10.1016/j.schres.2019.10.009]. This study demonstrated that shikimic acid is active against such pathogens as *Escherichia coli, Klebsiella pneumoniae, Pseudomonas aeruginosa* and *Staphylococcus aureus.* However, the study showed that rather high concentrations of shikimic acid are needed for persistent antibacterial effect. By the present day the direct impact of shikimic acid on mold *Aspergillus niger* or other similar molds has not been studied in any relevant investigations, thus emphasizing the urgency of novel phytoalliance development and investigation of shikimic acid properties in respect to the household molds. One scientific article emphasizes the limited data available regarding the specific impact of shikimic acid on certain microorganisms, such as *Aspergillus niger, Penicillium funiculosum* [M. Soleimani, A. E. Enferadi, and N. Hoda. "Antifungal activity of shikimic acid: from ethnobotanical uses to emerging therapeutic potential." Journal of Herbal Medicine, 2019. DOI: 10.1016/j.hermed.2019.100294]. Thus, further investigations and evaluation of potential impact of shikimic acid on black mold and other microorganisms are still needed.

The authors provide a biodegradable fungicidal phytoalliance based on shikimic acid and terpenes of plant origin for inhibition of spore formation and growth of mold mycelium of *Aspergillus niger, Penicillium funiculosum* and *Fusarium solani* on hard or dense surfaces of the house. Innovative alliance is aimed at effective inhibition of growth of fungal and mold mycelium, and prevention of re-sporulation through effective cleansing the surfaces from various microorganisms and provision of hygienic effect. The combination works to facilitate the fungicidal potential, in particular, the fungicide penetration through the cell wall and provision of targeted inhibition of mold growth and sporulation at minimal concentrations due to synergistic activity of the components. The alliance based on natural and biodegradable components is effective in pH range 3.0 to 9.5 in the presence of various synthetic and natural basic components, therefore, it can be used in environmentally friendly household chemicals intended for all surfaces. Therefore, combined use of the components in the claimed composition in one product results in improved prevention of fungal and mold growth and spore destruction without damaging the surface of item to be cleaned. The distinguishing feature is that the components at claimed concentrations affect only fungi and mold and do not impair the custom look of the item to be cleaned, and maintain functional activity for a long period of time.

### SUMMARY OF INVENTION

The first aspect of the invention is related to a biodegradable fungicidal phytoalliance based on shikimic acid and terpenes, and the use thereof for effective inhibition of yeast-like fungi, fungi and mold affecting house and food, such as *Aspergillus niger, Penicillium funiculosum, Fusarium solani.* A phytoalliance of plant origin for use in multipurpose household chemicals comprises the components A and B, wherein:
(A) Shikimic acid or the salts thereof, shikimates, of plant origin;
(B) Terpenes of plant origin isolated from essential oils and/or plant extracts, or entering the composition of essential oils, such as β-caryophyllene, 3-carene, eugenol or terpinen-4-ol individually or as combination thereof,
wherein the weight ratio of the components in terms of active substances is (0.06-0.5):(0.03-0.5) wt%, respectively.

The composition is distinguished by that terpenes of plant origin isolated from essential oils and/or plant extracts, or entering the composition of essential oils, are commercially available substances terpinen-4-ol, eugenol, 3-carene, β-caryophyllene and/or α-pinene from essential oils of herbaceous plants, coniferous plants or trees. Terpinen-4-ol (CAS 562-74-3) can be taken as individual substance or terpinen-4-ol-enriched essential oil from *Lavandula angustifolia, Melaleuca alternifolia* or *Juniperus communis.* Eugenol (CAS 97-53-0) can be taken as individual substance, essential oil or a plant extract from *Eugenia caryophyllus, Rosmarinus officinalis, Cinnamomum zeylanicum.* 3-carene (CAS 13466-78-9) can be taken as individual substance or essential oil from *Pinus silvestris, Juniperus communis, Picea abies, turpentine.* β-caryophyllene (CAS 87-44-5) can be taken as individual substance, essential oil or a plant extract from *Eugenia caryophyllus, Rosmarinus officinalis, Piper nigrum, Copaifera reticulata, Lavandula angustifolia, Cinnamomum zeylanicum, Melissa officinalis, Origanum vulgare.* α-Pinene (CAS 80-56-8) can be taken as individual substance, essential oil or a plant extract from *Mentha arvensis, Rosmarinus officinalis, Pinus silvestris, Juniperus communis, Picea abies.*

The composition is distinguished by that shikimic acid or the salts thereof, shikimates, are the substance or commercially available shikimic acid with registration number CAS 138-59-0. Shikimic acid can be taken as shikimic acid, shikimic acid-adjusted plant extract from *Illicium verum (Anise),* or other commercially available raw material positions.

Terpenes of plant origin of the invention are individual isolated compounds, or plant extract, oily extract, or CO₂-extract thereof, or essential oil enriched with said compound and/or terpene-adjusted.

The composition of the invention can comprise, wt%:
Shikimic acid or the salts thereof, shikimates, 0.06-0.50%, Terpenes of plant origin, specifically β-caryophyllene, 3-carene, eugenol, terpinen-4-ol individually or as combination thereof 0.03-0.50%.

The second aspect of the invention is related to a multi-purpose household chemical, in particular, to a bathroom cleaner, comprising 0.06 to 0.50% of composition of the invention.

The third aspect of the invention is related to a multi-purpose household chemical, in particular, to a cleaner suitable for all surfaces, comprising 0.06 to 0.50% of composition of the invention.

The fourth aspect of the invention is related to a multi-purpose household chemical, in particular, to a toilet bowl cleaner, comprising 0.06 to 0.50% of composition of the invention.

The fifth aspect of the invention is related to a multi-purpose household chemical, in particular, to a kitchen cleaner, comprising 0.06 to 0.50% of composition of the invention.

The sixth aspect of the invention is related to a multi-purpose household chemical, in particular, to a cleaner intended for dishwashing and for dense and hard surfaces, said cleaner comprising 0.06 to 0.50% of composition of the invention.

The seventh aspect of the invention is related to the use of a biodegradable fungicidal phytoalliance based on shikimic acid and terpenes and the use thereof for effective growth inhibition of the strains of yeast-like fungi, fungi and molds at home and on food, such as *Aspergillus niger, Penicillium funiculosum, Fusarium solani,* with the household chemicals.

### DETAILED DESCRIPTION

The provided invention is related to a biodegradable fungicidal phytoalliance for effective inhibition of yeast-like fungi, fungi and mold strains affecting house and food, such as *Aspergillus niger, Penicillium funiculosum, Fusarium solani,* and comprises a shikimic acid or the salts thereof, shikimates, of plant origin and terpenes of plant origin, isolated from essential oils and/or plant extracts or entering the composition of essential oils, such as β-caryophyllene, 3-carene, eugenol or terpinen-4-ol individually or as combination thereof, at the weight ratio of (0.06-0.5):(0.03-0.5) wt% respectively.

Shikimic acid or the salts thereof, shikimates, of plant origin, in particular, shikimic acid (INCI: Shikimic acid) is a commercially available ingredient well-known to those skilled in the art.

Terpenes of plant origin, in particular, β-caryophyllene, 3-carene, eugenol or terpinen-4-ol individually or as a combination thereof, are commercially available ingredients well-known to those skilled in the art. In the household chemicals of the invention terpenes of plant origin can be taken as individual isolated compounds, a plant extract, an oily extract, CO2-extract thereof, or as essential oil, enriched with respective compound and/or compound-adjusted, from the following plants: *Lavandula angustifolia, Melaleuca alternifolia, Juniperus communis, Eugenia caryophyllus, Rosmarinus officinalis, Cinnamomum zeylanicum, Pinus silvestris, Picea abies, turpentine, Piper nigrum, Copaifera reticulata, Melissa officinalis, Origanum vulgare, Mentha arvensis.*

A composition of the invention can comprise, wt%: Shikimic acid or the salts thereof, shikimates 0.06-0.50%, Terpenes of plant origin, specifically β-caryophyllene, 3-carene, eugenol, terpinen-4-ol individually or as combination thereof 0.03-0.50%.

In the product of the invention the acceptable excipients can be optionally selected from the following categories of components depending on formulation of the final product comprising the composition of the invention.

### Anionic surfactants:

1. Higher carboxylic acid salts of general formula: R1-CO2X1, wherein R1 is alkyl and/or alkenyl with the length of hydrocarbon chain from 5 to 21 carbon atoms, and X1 is a cation of alkali metal and/or alkaline earth metal, ammonium, alkyl ammonium, alkanolammonium, glucammonium, basic amino acid;
2. Amide salt of higher carboxylic acid and methylglycine of general formula R4-C(O)-N(-CH3)-CH2-CO2X4, wherein R4 is alkyl and/or alkenyl with the length of hydrocarbon chain from 5 to 21 carbon atoms, and X4 is a cation of alkali metal and/or alkaline earth metal, ammonium, alkyl ammonium, alkanolammonium, glucammonium;
3. Alkyl polyethylene glycol carboxylate of general formula: R5-O(-CH2-CH2-O-)n2CH2-CO2X5, wherein n2 is an integer from 1 to 15, and designates the number of polyethylene glycol groups, R5 is alkyl and/or alkenyl with the length of hydrocarbon chain from 6 to 22 carbon atoms, and X5 is a cation of alkali metal and/or alkaline earth metal, ammonium, alkyl ammonium, alkanolammonium, glucammonium;
4. Alkyl sulphate of general formula R3-OSO3X3, wherein R3 is alkyl and/or alkenyl with the length of hydrocarbon chain from 6 to 22 carbon atoms, and X3 is a cation of alkali metal and/or alkaline earth metal, ammonium, alkyl ammonium, alkanolammonium, glucammonium;
5. Alkyl polyethylene glycol sulphate of general formula: R2-O(-CH2-CH2-O) n1SO3X2, wherein n1 is an integer from 1to 10, and designates the number of polyethylene glycol groups, R2 is alkyl and/or alkenyl with the length of hydrocarbon chain from 6 to 22 carbon atoms, and X2 is a cation of alkali metal and/or alkaline earth metal, ammonium, alkyl ammonium, alkanolammonium, glucammonium;
6. Disubstituted salt of 2-sulfo-carboxylic acid of general formula: R6-CH(-SO3X6)-CO2X6, wherein R6 is alkyl and/or alkenyl with the length of hydrocarbon chain from 4 to 20 carbon atoms, and X6 is a cation of alkali metal and/or alkaline earth metal, ammonium, alkyl ammonium, alkanolammonium, glucammonium, basic amino acid;
7. Mono- or disibstituted amide salt of higher carboxylic acid and glutamic acid of general formula: R7-C(O)-NH-CH(-CH2-CH2-CO2X7)-CO2X7, wherein R7 is alkyl and/or alkenyl with the length of hydrocarbon chain from 5 to 21 carbon atoms, and X7 is a cation of alkali metal and/or alkaline earth metal, ammonium, alkyl ammonium, alkanolammonium, glucammonium, basic amino acid or hydrogen;
8. Amide salt of higher carboxylic acid and glycine of general formula: R8-C(O)-NH-CH2-CO2X8, wherein R8 is alkyl and/or alkenyl with the length of hydrocarbon chain from 5 to 21 carbon atoms, and X8 is a cation of alkali metal and/or alkaline earth metal, ammonium, alkyl ammonium, alkanolammonium, glucammonium;
9. Amide salt of higher carboxylic acid and alanine of general formula: R9-C(O)-NH-CH(-CH3)-CO2X9, wherein R9 is alkyl and/or alkenyl with the length of hydrocarbon chain from 5 to 21 carbon atoms, and X9 is a cation of alkali metal and/or alkaline earth metal, ammonium, alkyl ammonium, alkanolammonium, glucammonium;
10. Amide salt of higher carboxylic acid and 2-aminomethyl ethanesulphonic acid of general formula: R10-C(O)-N(-CH3)-CH2-CH2-SO3X10, wherein R10 is alkyl and/or alkenyl with the length of hydrocarbon chain from 5 to 21 carbon atoms, and X10 is a cation of alkali metal and/or alkaline earth metal, ammonium, alkyl ammonium, alkanolammonium, glucammonium;
11. Alkylpolyglucoside hydroxypropylsulfonate of general formula: R11-O-[G]p1-O-CH2-CH(-OH)-CH2-SO3X11, wherein R11 is alkyl and/or alkenyl with the length of hydrocarbon chain from 6 to 22 carbon atoms, G is a saccharide fragment containing 5 or 6 carbon atoms, p1 is an integer from 1 to 4, and X11 is a cation of alkali metal and/or alkaline earth metal, ammonium, alkyl ammonium, alkanolammonium, glucammonium;
12. Alkylpolyglucoside carboxylate of general formula: R12-O-[G]p2-O-CH2-CO2X12, wherein R12 is alkyl and/or alkenyl with the length of hydrocarbon chain from 6 to 22 carbon atoms, G is a saccharide fragment containing 5 or 6 carbon atoms, p2 is an integer from 1 to 4, and X12 is a cation of alkali metal and/or alkaline earth metal, ammonium, alkyl ammonium, alkanolammonium, glucammonium;
13. Amide salt of higher carboxylic acid and threonine of general formula: R13-C(O)-NH-CH(-CH(-OH)-CH3)-CO2X13, wherein R13 is alkyl and/or alkenyl with the length of hydrocarbon chain from 5 to 21 carbon atoms, a X13 is a cation of alkali metal and/or alkaline earth metal, ammonium, alkyl ammonium, alkanolammonium, glucammonium;
14. Amide salt of higher carboxylic acid and amino acid obtained by plant protein hydrolysis of general formula: R14-C(O)-AAX14, wherein R14 is alkyl and/or alkenyl with the length of hydrocarbon chain from 5 to 21 carbon atoms, AA is an amino acid or peptide obtained from the plant protein hydrolysis (suitable protein sources: apple, soybean, wheat, cotton plant, etc.), a X14 is a cation of alkali metal and/or alkaline earth metal, ammonium, alkyl ammonium, alkanolammonium, glucammonium.
15. Rhamnolipids presented by glycolipid surfactants of microbial origin. Rhamnose fragments may be present both as mono- (one) and bi- (two) units linked with α-1,2-glycoside bonds. The lipid fragments are linked through ester bond between β-hydroxy groups, and may be saturated, mono-unsaturated or poly-unsaturated, with the length of chain from C8 to C16.

### Amphoteric surfactants:

1. Disubstituted salt of acylamphodiacetate of general formula: R15-C(O)-NH-CH2-CH2-N(-CH2-CO2X15)-CH2-CH2-O-CH2-CO2X15, wherein R15 is alkyl and/or alkenyl with the length of hydrocarbon chain from 5 to 21 carbon atoms, and X15 is a cation of alkali metal and/or alkaline earth metal, ammonium, alkyl ammonium, alkanolammonium, glucammonium;
2. A salt of acylamphoacetate of general formula: R16-C(O)-NH-CH2-CH2-N(-CH2-CO2X16)-CH2-CH2-OH, wherein R16 is alkyl and/or alkenyl with the length of hydrocarbon chain from 5 to 21 carbon atoms, and X16 is a cation of alkali metal and/or alkaline earth metal, ammonium, alkyl ammonium, alkanolammonium, glucammonium;
3. A salt of alkylamphoacetate of general formula: R17-C(=N-CH2-CH2-N((-CH2-CH2-OH)-CH2-CO2X17)-), wherein R17 is alkyl and/or alkenyl with the length of hydrocarbon chain from 5 to 21 carbon atoms, and X17 is a cation of alkali metal and/or alkaline earth metal, ammonium, alkyl ammonium, alkanolammonium, glucammonium;
4. Acylamidoalkylbetaine of general formula: R18-C(O)-NH-R19-N(-CH3)2)-CH2-CO2, wherein R18 is alkyl and/or alkenyl with the length of hydrocarbon chain from 5 to 21 carbon atoms, R19 is alkyl with the length of hydrocarbon chain from 1 to 4 carbon atoms;
5. Acylamidoalkylhydroxysultaine of general formula: R20-C(O)-NH-R21-N(-CH3)2-CH2-CH(-OH)-CH2-SO3, wherein R20 is alkyl and/or alkenyl with the length of hydrocarbon chain from 5 to 21 carbon atoms, R21 is alkyl with the length of hydrocarbon chain from 1 to 4 carbon atoms;
6. Acylamidoalkylamine oxide of general formula: R22-C(O)-NH-R23-N(-CH3)2-O, wherein R22 is alkyl and/or alkenyl with the length of hydrocarbon chain from 5 to 21 carbon atoms, R23 is alkyl with the length of hydrocarbon chain from 1 to 4 carbon atoms;
7. Alkylbetaine of general formula: R24-N(-CH3)2)-CH2-CO2, wherein R24 is alkyl and/or alkenyl with the length of hydrocarbon chain from 5 to 21 carbon atoms;
8. Alkylhydroxysultaine of general formula: R25-N(-CH3)2-CH2-CH(-OH)-CH2-SO3, wherein R25 is alkyl and/or alkenyl with the length of hydrocarbon chain from 6 to 22 carbon atoms;
9. Alkylsultaine of general formula: R26-N(-CH3)2-CH2-CH2-CH2-SO3, wherein R26 is alkyl and/or alkenyl with the length of hydrocarbon chain from 6 to 22 carbon atoms;
10. Alkylamine oxide of general formula: R27-N(-CH3)2-O, wherein R26 is alkyl and/or alkenyl with the length of hydrocarbon chain from 6 to 22 carbon atoms.

### Nonionic surfactants:

1. Alkylpolyethylene glycol of general formula: R29-O(-CH2-CH2-O-)n3H, wherein n3 is an integer from 2 to 20, and designates the number of polyethylene glycol groups, R29 is alkyl and/or alkenyl with the length of hydrocarbon chain from 6 to 22 carbon atoms;
2. Alkylpolyethylene/propylene glycol of general formula: R30-O(-CH2-CH2-O-)n4(-CH(-CH3)-CH2-O-)n5H, wherein n4 is an integer from 2 to 20, and designates the number of polyethylene glycol groups, n5 is an integer from 2 to 20, and designates the number of polypropylene glycol groups, R30 is alkyl and/or alkenyl with the length of hydrocarbon chain from 6 to 22 carbon atoms;
3. Dialkylpolyethylene glycol of general formula: R31-O(-CH2-CH2-O-)n6R32, wherein n6 is an integer from 2 to 20, and designates the number of polyethylene glycol groups, R31 is alkyl and/or alkenyl with the length of hydrocarbon chain from 6 to 22 carbon atoms, R32 is alkyl and/or alkenyl with the length of hydrocarbon chain from 1 to 12 carbon atoms;
4. Dialkylpolyethylene/propylene glycol of general formula: R33-O(-CH2-CH2-O-)n7(-CH(-CH3)-CH2-O-)n8-R34, wherein n7 is an integer from 2 to 20, and designates the number of polyethylene glycol groups, n8 is an integer from 2 to 20, and designates the number of polypropylene glycol groups, R33 is alkyl and/or alkenyl with the length of hydrocarbon chain from 6 to 22 carbon atoms, R34 is alkyl and/or alkenyl with the length of hydrocarbon chain from 1 to 12 carbon atoms.

### Solvents:

1. organic alcohol of general formula: R35(-OH)s1, wherein R35 is alkyl with the length of hydrocarbon chain from 3 to 12 carbon atoms, S1 is an integer from 1 to 12, and designates the number of hydroxyl groups, which are arranged in a random order with respect to one another in the hydrocarbyl radical;
2. Alkylpolypropylene glycol of general formula: H(-CH(-CH3)-CH2-O-)n9R36, wherein n9 is an integer from 2 to 10, and designates the number of polypropylene glycol groups, R36 is alkyl with the length of hydrocarbon chain from 1 to 10 carbon atoms.

### pH adjusting agents:

1. Organic acids of general formula: R37(-OH)s2(-COOH)m1, wherein R37 is alkyl with the length of hydrocarbon chain from 1 to 12 carbon atoms, S2 is an integer from 1 to 12, and designates the number of hydroxyl groups, which are arranged in a random order with respect to one another in the hydrocarbyl radical, M1 is an integer from 1 to 4, and designates the number of carboxyl groups, which are arranged in a random order with respect to one another in the hydrocarbyl radical;
2. The solvents of alkali metal or alkaline earth metal hydroxides, of ammonia, primary and tertiary amins, primary and tertiary alkylamines, primary and tertiary alkanolamines, primary and tertiary glucamines, basic amino acids, disodium citrate, trisodium citrate.

### Chelates or complexing agents:

1. Trisodium methylglycine diacetate, tetrasodium glutamine diacetate, trisodium ethylenediamine-(N,N)-disuccinate;
2. Organic acids, and the salts formed by alkali metals, ammonium, alkylammonium, alkanolammonium, glucammonium and respective acids including citric acid, malonic acid, tartaric acid, glutaric acid, adipic acid, glucuronic acid, galacturonic acid, galactaric acid, gluconic acid, phytic acid, polytaconic acid, polyacrylic acid, polymethacrylic acid, acrylic acid and maleic acid copolymer, organic acids of general formula R38(-OH)s3(-COOH)m2, wherein R38 is alkyl with the length of hydrocarbon chain from 1 to 12 carbon atoms, S3 is an integer from 1 to 12, and designates the number of hydroxyl groups, which are arranged in a random order with respect to one another in the hydrocarbyl radical, M2 is an integer from 1 to 4, and designates the number of carboxyl groups, which are arranged in a random order with respect to one another in the hydrocarbyl radical.

Solvents: glycerol, propylene glycol, propanediol, 1,2-hexylene glycol, butylene glycol, pentylene glycol or others.

Polymeric additives: cellulose gum, polyisobutene, acrylates copolymer, sodium acrylate/sodium acryloyldimethyl taurate copolymer or others.

### Preservatives:

1. Organic acids and salts formed by respective acids including benzoic acid, sorbic acid, 4-methoxybenzoic acid, salicylic acid, undecylenic acid, and alkali metals, alkaline-earth metals, ammonium, alkylammonium, alkanolammonium, glucoammonium;
2. Organic alcohols and phenols: phenoxyethanol, benzyl alcohol, caprylyl glycol, ethylhexylglycerin, phenethanol, 3-methyl-4-isopropylphenol, 2,4-dichlorobenzyl alcohol;
3. Broad-spectrum biocidal agents: benzisothiazolinone, methylisothiazolinone, dodecyl dodecylpropylene triamine, sodium pyrithione, climbazole.

Perfumes of any olfactory direction to impart better consumer properties.

### EXPERIMENTS

The examples in this specification are not considered as limiting the present invention, and are included merely for illustrative purpose and to support the achievement of the expected technical results. These examples are among many experimental findings obtained by the Authors of invention, which prove the efficacy of the products within the scope of invention.

### Example 1.

Liquid detergent was prepared, in particular, liquid concentrate bathroom cleaner, within the scope of invention (Table 1).

**Table 1. The composition of liquid concentrate bathroom cleaner**

| **No** | **Component** | **Content, wt%** |
|---|---|---|
| 1 | Purified water | up to 100.00 |
| 2 | Decyl glycoside | 8.0 |
| 3 | Lactic acid | 3.0 |
| 4 | Citric acid monohydrate | 3.0 |
| 5 | Sodium cocosulphate | 2.5 |
| 6 | Glycerin (99,5%; 99,7%) | 1.0 |
| 7 | Xanthan gum | 0.1 |
| 8 | Cotton extract | 0.01 |
| 9 | Aqueous solution of citric acid and silver citrate | 0.01 |
| 10 | Perfume | 0.05-0.40 |
| 11 | Shikimic acid | 0.06-0.25 |
| 12 | Terpenes of plant origin | 0.03-0.25 |
| 13 | Preservative Parmetol SBX | 0.095 |
| 14 | Polyorganic acid, in particular polyglutamic acid | 0.3 |

Prepared liquid bathroom cleaner provides effective inhibition of sporulation and growth of mycelium of *Aspergillus niger, Penicillium funiculosum* preventing re-emergence of those molds at any hardness of tap water in the range of 0-15° dH. Average pH range of the cleaner is 3.0 to 3.5. The product efficiently removes visible mold manifestations, such as dark spots of spores, myceliuim and unpleasant odor thereof. The product penetrates deep pores of the surfaces and spaces and facilitates the care of the surfaces and home hygiene. The product is streak-free, completely washed-off from the treated surfaces, suitable for persons with sensitive hand skin, and stable at storage for 24 months (observation period).

### Example 2.

Liquid detergent was prepared, in particular, liquid concentrate cleaner suitable for all surfaces, within the scope of invention (Table 2).

**Table 2. The composition of liquid concentrate cleaner suitable for all surfaces**

| **No** | **Component** | **Content, wt%** |
|---|---|---|
| 1 | Purified water | up to 100.00 |
| 2 | Decyl glycoside | 6.0 |
| 3 | Potassium cocoate | 1.5 |
| 4 | Tetrasodium glutamate diacetate (47% solution) | 1.0 |
| 5 | Citric acid monohydrate | 0.12 |
| 6 | Cotton extract | 0.01 |
| 7 | Aqueous solution of citric acid and silver citrate | 0.01 |
| 8 | Preservative Parmetol SBX | 0.095 |
| 10 | Perfume | 0.05-0.40 |
| 11 | Shikimic acid | 0.06-0.25 |
| 12 | Terpenes of plant origin | 0.03-0.25 |

Prepared liquid concentrate cleaner suitable for all surfaces provides effective inhibition of sporulation and growth of mycelium of *Aspergillus niger, Penicillium funiculosum* preventing re-emergence of those molds at any hardness of tap water in the range of 0-15° dH. Average pH range of the cleaner is 8.5 to 9.5. The product efficiently removes visible mold manifestations, such as dark spots of spores, myceliuim and unpleasant odor thereof. The product penetrates deep pores of the surfaces and spaces and facilitates the care of plastic, wooden, metal, and glass surfaces and home hygiene. The product is streak-free, completely washed-off from the treated surfaces, suitable for persons with sensitive hand skin, and stable at storage for 24 months (observation period).

### Example 3.

In the study minimal inhibitory concentrations (MIC) of potentiators and fungicides against *Aspergillus niger* was evaluated. The substances selected for the test ae shown n Table 3.

**Table 3. Test samples of substances of the invention**

| Chemical name of the substance | Origin |
|---|---|
| **Fungicides** | |
| Shikimic acid 98% | Plant origin |
| Sodium hypochlorite 1% solution (active control) | Synthetic origin |
| Aqueous solution of citric acid and silver citrate (active control) | Synthetic origin |
| Benzalkonium chloride 98% (active control) | Synthetic origin |

| **Potentiators** | |
|---|---|
| β-caryophyllene 90% | Plant origin |
| 3-carene 95% | Plant origin |
| Eugenol 80% | Plant origin |
| Mixture of terpenes (eugenol 35-50%, terpinen-4-ol 15-30%, β-caryophyllene 5-10%, α-pinene 5-10% and solvents) | Plant origin |

The test procedure is based on evaluation of minimal inhibitory concentration (MIC) of the selected compounds by serial dilution method in potato glucose medium. Potato glucose medium was used for MIC evaluation and analysis of antifungal effect associated with the use of antifungal agents listed in Table 2. To prepare the potato glucose nutritive medium potato (300 g), distilled water (1000 mL), and 2% glucose (400 mg/mL) was taken. To prepare agar medium 2% agar was added. To obtain the spores of the filamentous fungus *Aspergillus niger* the strain was plated on potato glucose agar and cultivated in thermostat at 30 °C for 48 hours. For this purpose 96 well sterile plates were used. The investigators grew the spores of the mold fungus *Aspergillus niger* on potato glucose agar medium, then conidia rinses from the culture surface were collected with addition of sterile liquid potato glucose medium to achieve the thickness of the working suspensions at 1 McFarland unit. Visual MIC examination of the products was based on the absence of growth in the well in the presence of test compounds.

### Results.

Evaluation of MIC of fungicides and potentiators showed that eugenol, combination of terpenes, and benzalkonium chloride potently inhibit the growth of mycelium and spore formation of *Aspergillus niger* at exposure time of 15 minutes. More than 90% efficacy of inhibition of mycelium growth and sporulation was observed (Table 4).

**Table 4. Evaluation of MIC of compounds against Aspergillus niger.**

| | | **Potentiators** | | | | | | |
|---|---|---|---|---|---|---|---|---|
| | | β-Caryophyllene 90% | | 3-carene 95% | | Mixture of terpenes | | Eugenol 80% |
| **Replicate 1** | MIC | >4 | | >4 | | 2 | | 0.25 |
| **Replicate 2** | MIC | >4 | | >4 | | 2 | | 1 |
| **Replicate 3** | MIC | >4 | | 4 | | 2 | | 0.5 |
| **Total:** | | >4 | | >4 | | 2 | | 0.5 |

| | | **Fungicides** | | | | | | |
|---|---|---|---|---|---|---|---|---|
| | | Shikimic acid | Benzalkonium chloride 98% | | Sodium hypochlorite | | Aqueous solution of citric acid and silver citrate | |
| **Replicate 1** | MIC | >2 | 0.25 | | >2 | | >2 | |
| **Replicate 2** | MIC | >2 | 0.12 | | >2 | | >2 | |
| **Replicate 3** | MIC | >2 | 0.03 | | >2 | | >2 | |
| **Total:** | | >2 | 0.12 | | >2 | | >2 | |

However, essential oils generally are not sufficiently potent for inhibition of growth of black mold (and other mold species) at low concentration and within the short period of time. Shikimic acid alone exhibits low fungicidal activity with minimal inhibitory concentration (MIC) at 2%. This diminishes the usefulness of shikimic acid in the area of control of the pathogens because the limited activity of this compound is determined by various factors including limited water solubility and low penetration through the cell walls. In this view the use of phytoalliance comprising additional terpene components as potentiators can result in potentiation of fungicidal effect of shikimic acid. Terpenes, such as β-caryophyllene, eugenol, terpinen-4-ol, α-pinene, 3-carene are more potent fungicides and may contribute to better penetration and efficacy of shikimic acid against the pathogens.

Therefore, for more significant fungicidal effect it may be expedient to use the phytoalliances comprising shikimic acid in combination with terpene potentiators. This allows to increase the level of control of the pathogens and to improve the efficacy due to synergistic effect with better results in inhibition of mycelium growth and sporulation of molds.

### Example 4.

Minimal inhibitory concentration (MIC) of fungicide + potentiator combination was evaluated based on inhibition of mycelium growth and active spore formation of mold *Aspergillus niger.*

A checkerboard method was used to analyze the antifungal effect of antifungal agents used in combination. This method is based on the use of potato glucose medium. Each microtitration plate comprised a serial dilution of one antifungal agent while the other agent was used at a fixed concentration, and vice versa. The plates were incubated in thermostat at 30°C for 48 hours followed by visual evaluation based on the presence or the absence of fungi in the well, where the test compounds were added. According to established procedure of microbiological studies, visible absence of mold growth in the well was consistent with more than 75% inhibition of mycelium growth and spore formation of fungi.

### Results.

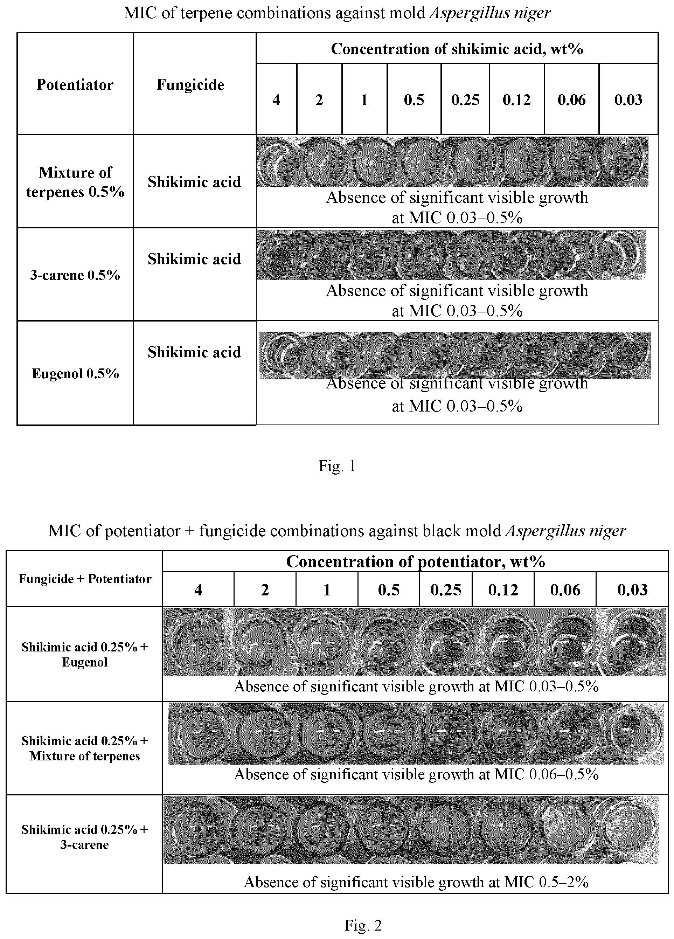

Based on evaluation of fungicidal activity and inhibition of spore formation by fungicide + potentiator combination it was established that combinations of shikimic acid with 3-carene or shikimic acid with terpene mixture demonstrate more pronounced fungicidal effect compared to individual substances. These combinations showed the highest capacity for suppression of biofilms, mycelium, and spore formation by mold *Aspergillus niger* under 15 min exposure. The best effect was obtained with shikimic acid concentrations 0.06-0.25% and terpene potentiator concentration 0.5% (Fig 1).

Fungicidal activity of individual agents such as shikimic acid and terpene potentiators exhibit antifungal activity with MIC 4% (3-carene) and 2% (mixture of terpenes). However, the combination of those components as phytoalliance results in synergistic effect allowing to decrease the concentration of each component to 0.06%, respectively, without compromising high fungicidal activity. Such interaction in phytoalliance is due to potential mutual potentiation of the components and may result in better penetration into the pathogen cells and more efficient destruction of the mold mycelium and sporulation arrest. This effect is comparable with the effect of 0.12% benzalkonium chloride and is superior to that of 2% aqueous silver citrate solution from the group of synthetic antiseptic agents exhibiting non-selective effect on home microflora (Table 3).

### Example 5.

Minimal inhibitory concentration (MIC) of essential oil in fungicide + potentiator combination was evaluated based on absence of mycelium growth and sporulation of fungus *Aspergillus niger.* Shikimic acid concentrations were fixed at the levels of 0.25% and 0.12% respectively. Tested combinations are sown in Table 5.

**Table 5. Tested combinations of the substances**

| **Fungicide** | **Potentiator** |
|---|---|
| Shikimic acid 0.25% | Eugenol 80% |
| | 3-carene 95% |
| | Mixture of terpenes (eugenol 35-50%, terpinen-4-ol 15-30%, β-caryophyllene 5-10%, α-pinene 5-10%, and solvents) |

A checkerboard method was used to analyze the antifungal effect of antufungal agents used in combination. This method is based on the use of potato glucose medium. Each microtitration plate comprised a serial dilution of one antifungal agent while the other agent was used at a fixed concentration, and vice versa. The plates were incubated in thermostat at 30°C for 48 hours followed by visual evaluation based on the presence or the absence of fungi in the well, where the test compounds were added. According to established procedure of microbiological studies, visible absence of mold growth in the well was consistent with more than 75% inhibition of mycelium growth and spore formation of fungi.

### Results.

Based on evaluation of fungicidal activity and suppression of spore formation by *Aspergillus niger* it was established that combinations of shikimic acid with eugenol or shikimic acid with mixture of terpenes comprising eugenol, terpinen-4-ol, β-caryophyllene, α-pinene demonstrate more pronounced fungicidal effect. These combinations showed the highest capacity for suppression of mycelium, and spore formation by mold *Aspergillus niger* under 15 min exposure. 3-carene also proved to be an effective potentiator of sporulation by mold *Aspergillus niger,* however, unlike the other combinations, 3-carene alone has not shown efficacy in inhibiting biofilms and mycelium of *Aspergillus niger.* 3-carene effectively inhibited spore formation of black mold, preventing the spread of mold and mycelium from the growth site. These results suggest potential efficacy of tested combinations and compounds when used for mold control and sporulation prevention (Fig. 2, Table 6).

The best fungicidal effect and inhibition of the black mold sporulation by fungicide + potentiator combinations was obtained for the combination of shikimic acid at a concentration of 0.25% and potentiators eugenol, mixture of terpenes, 3-carene at concentrations from 0.03 to 0.5%. This effect is comparable to the effect of 0.12% benzalkonium chloride and more pronounced than that of 2% sodium hypochlorite and 2% aqueous silver citrate solution from the group of synthetic antiseptic agents exhibiting non-selective effect on home microflora (Table 3). The main advantage of phytocombinations is the low risk of antibiotic resistance and other forms of resistance development due to multicomponent composition and multidirectional action on pathogenic targets, such as molds and fungi.

**Table 6. MIC of potentiator + fungicide combinations against black mold Aspergillus niger.**

| **Fungicide** | **Shikimic acid 0.25%** | | |
|---|---|---|---|
| **MIC of potentiator, %** | Eugenol >0.03% | Mixture of terpenes 0.06% | 3-carene 0.5% |

Essential oils are known to have properties of improving the penetration of the other components into bacteria [Pavela, R. (2015). Essential oils for the development of eco-friendly mosquito larvicides: A review. Industrial Crops and Products, 76, 174-187.; Lemos, M. F., Lemos, M. F., de Oliveira, L. V., Ribeiro, A. P., Gouvêa, V. A., & Faroni, L. R. (2019). Essential oils on the synergistic enhancement of pesticides against stored grain insects: prospects and constraints. Industrial Crops and Products, 140, 111628.], however, nothing was known previously about the impact of essential oils on the mold sporulation and about facilitation of fungicide penetration through the cell wall.

According to the invention, the proposed approach consists in combination of potentiator with potent fungicide of plant origin, which allows to improve the efficacy against molds while reducing the concentration of each component. Compared to currently recommended fungicide, such as sodium hypochlorite and benzalkonium chloride, the combinations based on shikimic acid at concentration of 0.06 to 0.50% and terpenes of plant origin at concentrations from 0.03 to 0.50% are an effective and safe method of control of mold *Aspergillus niger.* The use of lower concentrations of components significantly reduces the potential risks of toxicity, negative environmental impact and development of antibiotic resistance in the strains of home microflora compared to benzalkonium chloride [Kim M, Weigand MR, Oh S, Hatt JK, Krishnan R, Tezel U, Pavlostathis SG, Konstantinidis KT. Widely Used Benzalkonium Chloride Disinfectants Can Promote Antibiotic Resistance. Appl Environ Microbiol. 2018 Aug 17;84(17):01201-01218] and sodium hypochlorite [Tong C, Hu H, Chen G, Li Z, Li A, Zhang J. Chlorine disinfectants promote microbial resistance in Pseudomonas sp. Environ Res. 2021 Aug;199:111296].

### Example 6.

Antifugal effect of liquid bathroom cleaner comprising a composition of the invention (Table 1) against the molds *Aspergillus niger, Fusarium solani* and *Penicillium funiculosum* was studied in laboratory investigation. Basic components of liquid bathroom cleaner, the rooms untreated with the composition of the invention, commercially available product exhibiting marked antibacterial effect, and commercially available marketed product claiming 100% removal of black mold from various materials and surfaces were selected as positive controls (Table 7).

**Table 7. The composition of tested detergents in Example 6**

| **Name** | **Composition (ingredients)** | **A component responsible for fungicidal effect** |
|---|---|---|
| Detergent No 1 | Basic components of the cleaner free from shikimic acid and terpenes of plant origin (Table 1) | None |
| Detergent No2 | Basic components of the cleaner with added shikimic acid and terpenes of plant origin (Table 1) | Shikimic acid 0.12% Mixture of terpenes 0.09% |
| Detergent No3 | <5% nonionic surfactant, amphoteric surfactant, anionic surfactant, lactic acid, glycolic acid, grape fruit essential oil, preservative, silver citrate, cotton extract, limonene. | Silver citrate (know-how concentration) |
| Detergent No4 | Bleach comprising less than 5% of chlorine, anionic surfactants, nonionic surfactants, perfume. | Sodium hypochlorite (<5%) |

For the experiment potato glucose nutritive medium was used, which comprised potato (300 g), distilled water (1000 mL), and 2% glucose (400 mg/mL) (400 mg/mL). To prepare agar medium 2% agar was added. The composition of BM nutritive medium (BM-medium) was as follows: peptone 0.7%; glucose 0.5%; MgSO4*7H2O 0.2%; CaCl2 0.005%.

The strains of *Aspergillus niger* (F-894), *Fusarium solani* and *Penicillium funiculosum* from Microbial strain collection were used as the test-organisms. Each strain was cultivated in liquid nutritive BM-medium for 72 hours to obtain mycelium. Then mycelium was broken into small pieces by intensive agitation, followed by addition of liquid medium and pouring into Eppendorf tubes to obtain 1 mL aliquots with optical density 0.1. After centrifugation the culture broth was collected, 100% undiluted test detergents were added to the sediment composed of mycelium (and spores), conidia were suspended and left for 15 or 30 minutes, the detergents were removed and neutralized by addition of 1 mL of liquid medium. Then the Eppendorf tube contents was poured on the plate with potato agar medium, plate was placed into thermostat at 30 °C, and photos were taken within 1 or 2 days. The area occupied by mycelium was calculated with the use of software BioFilmAnalyser.exe and Microsoft Office Excel were used.

### Results.

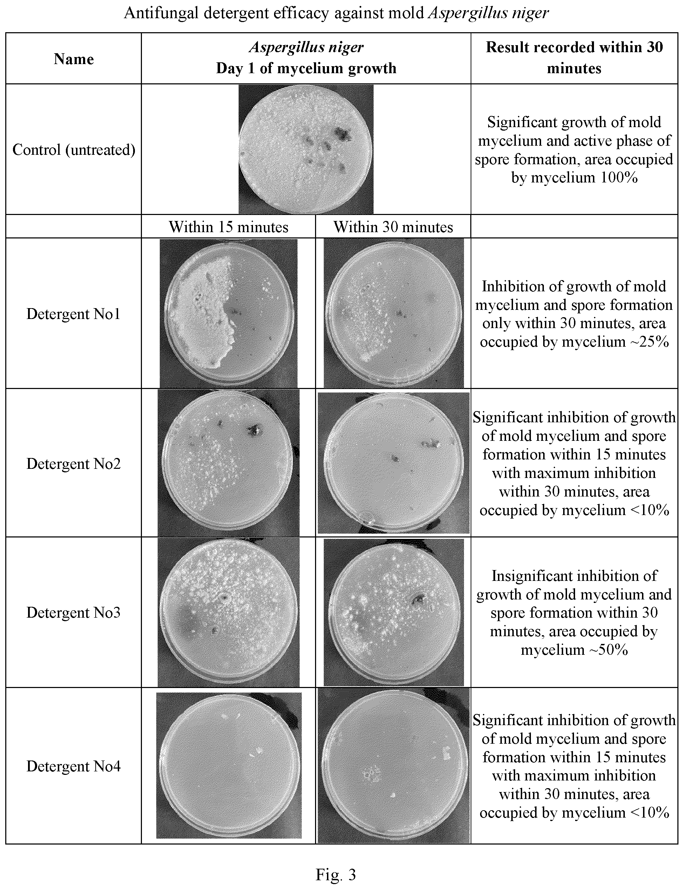

Based on the study results the conclusion was made that liquid bathroom cleaner comprising the composition of the invention exhibited pronounced antifungal effect, which was achieved within 15 minutes against *Fusarium solani* and *Penicillium funiculosum* and within 30 minutes against *Aspergillus niger* (Fig. 3).

Fungicidal phytoalliance based on shikimic acid and terpenes of plant origin inhibited active formation of *Aspergillus niger* spores on the surfaces rather than just inhibited visible mold growth on Petri dishes. Detergent comprising the composition provided pronounced 90% inhibition of mycelium and spores within 15 minutes. The efficacy of basic components in the absence of composition was less significant, and only 75% growth inhibition insufficient for antifungal effect was observed within 15 minutes. The detergent comprising silver citrate provided only 50% mycelium inhibition, while the spore formation was observed. The detergent comprising sodium hypochlorite showed high efficacy greater than 90%, which was comparable to efficacy of composition of the invention; the effect was achieved within 15 minutes, and the observed spores were discolored due to bleaching effect of sodium hypochlorite.

Since black mold *Aspergillus niger* and the spores thereof is most common in moist premises, bathrooms, and ventilation systems, and provoke the respiratory diseases in adults and children [Khaldeeva E.V., Glushko N.I., Lisovskaya S.A. et al. Indoor fungal contamination as a biological risk factor. Kazan Medical Journal. 2020; 101 (4): 513-518], effective suppression of mycelium growth and spore destruction are essential for long-term maintenance of health and home microflora. The composition of the invention provides comparable efficacy in respect to *Aspergillus niger* elimination, which is associated with minimum risk of resistance development due to multicomponent composition, safe action on the treated surfaces, and absence of skin irritation. Sodium hypochlorite is a well-known irritant, and causes allergic contact dermatitis, skin irritation, cough, lung edema, chronic pneumonitis, when sodium hypochlorite-containing products are used on regular basis in domestic life [Chung I, Ryu H, Yoon SY, Ha JC. Health effects of sodium hypochlorite: review of published case reports. Environ Anal Health Toxicol. 2022], thus, the composition of plant origin is a safe alternative providing comparable efficacy of mold removal.

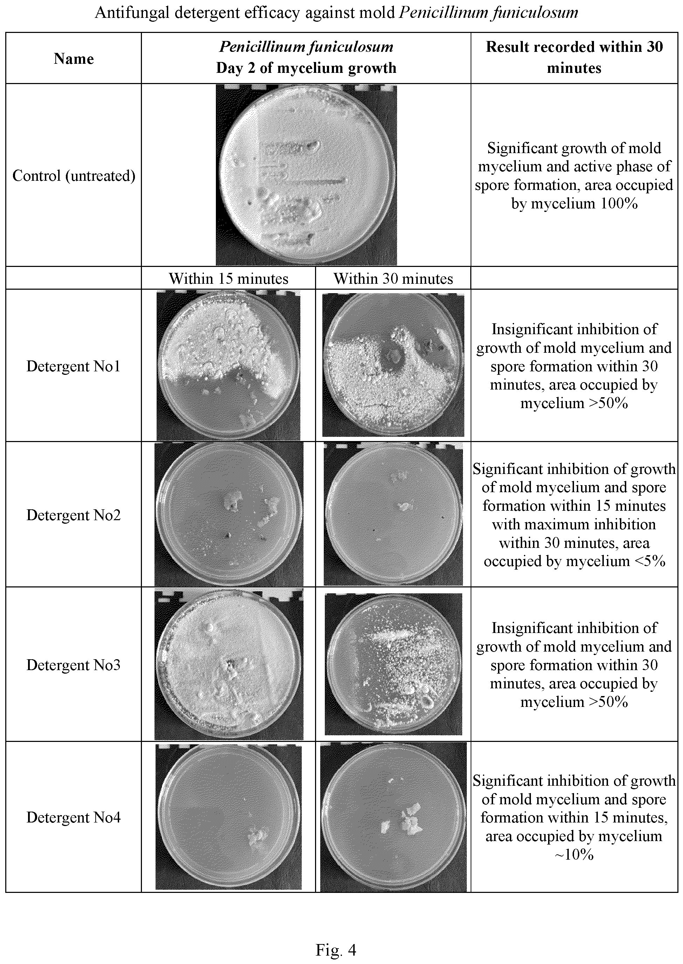

Detergent No 2 comprising the composition of the invention demonstrated pronounced fungicidal effect against mold *Penicillium funiculosum* within 15 minutes and 30 minutes of exposure (Fig. 4). Detergent No1 free of composition of the invention failed to reach 100% efficacy of inhibition of mycelium growth, and this result did not improve after 30 minutes of exposure suggesting obvious contribution of phytoalliance to the targeted fungicidal 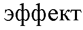 . Detergent No3 comprising silver citrate was virtually ineffective, and did not inhibit the mycelium growth or spore formation of *Penicillinum funiculosum.* Sodium hypochlorite being a component of Detergent No4 significantly inhibited the growth of mycelium microareas, however it neither provided 100% efficacy, nor affected large areas of *Penicillinum funiculosum* mycelium being inferior to the composition of the invention.

Since white mold *Penicillinum funiculosum* and the spores therod are most commonly found in most premises, in the home air, in kitchen and release toxins to the air [Khaldeeva E.V., Glushko N.I., Lisovskaya S.A. et al. Indoor fungal contamination as a biological risk factor. Kazan Medical Journal. 2020; 101 (4): 513-518], effective suppression of mycelium growth and spore destruction are essential for maintenance of health and home microflora in order to prevent the allergic diseases of respiratory tract.

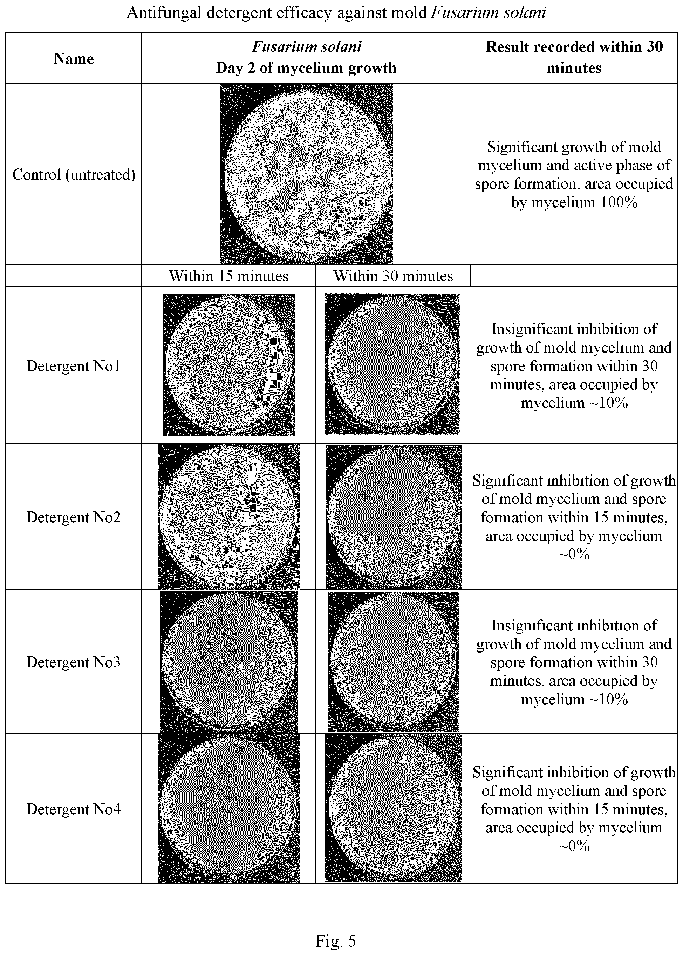

All tested detergents have demonstrated pronounced fungicidal effect against the mold *Fusarium solani* already within 15 minutes of exposure (Fig. 5). This food-borne mold is one of the most common indoors and exhibits pronounced allergic potential towards adults and children [Khaldeeva E.V., Glushko N.I., Lisovskaya S.A. et al. Indoor fungal contamination as a biological risk factor. Kazan Medical Journal. 2020; 101 (4): 513-518]. Detergent No2 comprising the composition of the invention demonstrated 100% efficacy and provided the inhibition of mycelium growth already within 15 minutes suggesting obvious contribution of phytoalliance to targeted fungicidal effect compared to basic components of Detergent No1. Detergent No3 comprising silver citrate virtually showed cumulative effect only after prolonged contact with mycelium of *Fusarium solani.* Sodium hypochlorite as a component of Detergent No4 completely inhibited the growth of mycelium microareas demonstrating the efficacy comparable to that of composition of the invention.

Since the food affecting mold *Fusarium solani* and the spores thereof are most commonly found indoors and trigger the development of allergic diseases [Khaldeeva E.V., Glushko N.I., Lisovskaya S.A. et al. Indoor fungal contamination as a biological risk factor. Kazan Medical Journal. 2020; 101 (4): 513-518], effective suppression of mycelium growth and spore destruction are essential for long-term maintenance of health and home microflora. Fungicidal phytoalliance based on shikimic acid and terpenes of plant origin showed the highest efficacy associated with improved safety profile compared to controls, because sodium hypochlorite causes allergic contact dermatitis, skin irritation, cough, lung edema, chronic pneumonitis after inhalation or skin contact during the room cleaning [Chung I, Ryu H, Yoon SY, Ha JC. Health effects of sodium hypochlorite: review of published case reports. Environ Anal Health Toxicol. 2022].

Thus, the fungicidal phytoalliance based on shikimic acid and terpenes of plant origin of the invention exhibited pronounced targeted action against growing mycelium and spores of molds *Aspergillus, Penicillium* and *Fusarium,* being degradable, natural and safe for skin when exposed during cleaning various home surfaces and areas.

### Example 7.

Detergents comprising a composition of the invention or other antimicrobial additives were tested for irritation potential using visual assessment method. 10 volunteers comprising a test group gave voluntary consent and were enrolled to the study in accordance with ethical principles set forth in Helsinki Declaration. Assessment of irritation potential is an integrated measure confirming the absence of adverse reactions with visual fixation of skin exposure and subjective perception documented in the course of verbal/written interview.

Each volunteer used Detergents No1, No2, No3 and No4 for 7 days and documented own skin reaction by questionnaire completion. If no subjective symptoms of objective irritation evidence were observed within one day after exposure to Detergent, the volunteers continued participation in the study and recorded the skin reaction. After completion of test period and follow-up period the volunteers were examined in laboratory for skin reactions. Throughout the test period the skin functional condition was visually assessed. Based on the findings collected in the study the irritation potential was scored from 0 to 5, wherein 0 is the absence of skin reactions and maintenance of normal skin condition, while 5 is marked irritation of skin reaction, significant impairment of skin condition and overall general wellbeing.

### Results.

For Detergents No1 and No2 the absence of skin reactions (pruritus, redness, desquamation, tingling, erythema) was confirmed after the use of the product for seven days at home with protective gloves (Table 8). Despite acidic pH in the range from 3 to 3.5 the detergents were free from irritation potential. Detergent No3 comprises several organic acids and thus caused light tingling and prickling sensations in the course of cleaning the surfaces without protective gloves. Further, the hand skin adapted and was not irritated upon prolonged contact due to the absence of aggressive components. The exposure to Detergent No4 resulted in dry skin, desquamation and pungent odor of bleach on the skin, which could not be washed off or a long period of time because of the presence of chlorine bleach. As time passed the skin retained the reaction to chlorine bleach and lost its softness, elasticity thus indicating the negative impact on the skin.

**Table 8. Evaluation of skin reactions in the test of detergents**

| **No** | **Product** | **Irritation index, score** | | | |
|---|---|---|---|---|---|
| | | **Immediately after exposure** | **Day 1** | **Day 3** | **Day 7** |
| 1 | Detergent No 1 | 1 | 0 | 0 | 0 |
| 2 | Detergent No2 | 1 | 0 | 0 | 0 |
| 3 | Detergent No3 | 2 | 1 | 1 | 0 |
| 4 | Detergent No4 | 3 | 3 | 2 | 2 |

Experimental results showed that the composition of the invention based on shikimic acid and terpenes of plant origin did not exhibit negative impact on skin under prolonged use of composition-containing detergent in the household practice. This fact supports safe dermatological profile for the persons with sensitive skin susceptible to allergic reactions, compared to the other synthetic fungicide additives.

## Claims

1. Fungicidal surface cleaning composition comprising the following components A and B:
A) shikimic acid or salts thereof, and
B) terpenes,
wherein the mass ratio of said components in said composition is the following
| A | B |
|---|---|
| 0.06-0.5 wt.% | 0.03-0.5 wt.% |

2. The composition of claim 1, wherein said components A is of plant origin.

3. The composition of claim 1 or claim 2, wherein said component B is of plant origin.

4. The composition of any of claims 1-3, wherein said component B is selected from the group consisting of β-caryophyllene, 3-carene, eugenol, terpinene-4-ol and α-pinene individually or any combination thereof.

5. The composition of claim 3 or claim 4, wherein said plant is selected from the following: *Lavandula angustifolia, Melaleuca alternifolia, Juniperus communis, Eugenia caryophyllus, Rosmarinus officinalis, Cinnamomum zeylanicum, Pinus silvestris, Picea abies, turpentine, Piper nigrum, Copaifera reticulata, Melissa officinalis, Origanum vulgare, Mentha arvensis.*

6. The composition of any of the preceding claims, wherein said fungicidal activity is directed against fungi selected from the group consisting of *Aspergillus niger, Penicillium funiculosum* and *Fusarium solani.*

7. The composition of any of the preceding claims, wherein said composition has a pH in the range of 3.0-9.5.

8. The composition of claim 7, wherein said composition has a pH of 3.0- 3.5 or 8.5-9.5.

9. The composition of any of the preceding claims, wherein said surface is an outer dense or hard surface of a non-living object, said surface including plastic, wood, metal and glass surfaces, and said object including floors, dishes and furniture.

10. The composition of any of the preceding claims, wherein said composition is formulated for application on an outer dense or hard surface of an object, said surface including plastic, wood, metal and glass surfaces, and said object including floors, dishes and furniture.

11. The composition of any of the preceding claims, wherein said composition is a formulation selected from the following: powder, granulate, tablet, liquid, aerosol, foam, spray, suspension, solution, paste and gel.

12. The composition of any of the preceding claims, wherein said composition is for protecting said surfaces from fungal contamination or for fungal suppression of fungi that have been colonized on said surfaces.

13. Use of the composition of any of any of claims 1-10 for protecting outer dense or hard surface of a non-living object from fungal contamination or for fungal suppression of fungi that have been colonized on said surfaces.

14. The use of shikimic acid or salts thereof and terpenes in the manufacture of composition of any of claims 1-11.

15. A treatment method of protecting an outer dense or hard surface of a non-living object from fungal contamination or for fungal suppression of fungi that have been colonized on said surfaces, said method comprising treating the surface with a composition of any of claims 1-11.
